(19) Europäisches Patentamt
European Patent Office
Office européen des brevets

(11) **EP 1 731 565 B2**

(12) **NEW EUROPEAN PATENT SPECIFICATION**
After opposition procedure

(45) Date of publication and mention
of the opposition decision:
**06.11.2019 Bulletin 2019/45**

(45) Mention of the grant of the patent:
**23.12.2015 Bulletin 2015/52**

(21) Application number: **05012355.3**

(22) Date of filing: **08.06.2005**

(51) Int Cl.:
*C08L 23/04* (2006.01)          *B32B 27/32* (2006.01)
*H01B 3/00* (2006.01)          *C08L 23/08* (2006.01)

(54) **Polyolefin composition for use as an insulating material**

Polyolefinzusammentsetzung zur Verwendung als Isoliermaterial

Composé de polyoléfines utilisé comme materiau d'isolation

(84) Designated Contracting States:
**AT BE BG CH CY CZ DE DK EE ES FI FR GB GR HU IE IS IT LI LT LU MC NL PL PT RO SE SI SK TR**
Designated Extension States:
**HR**

(43) Date of publication of application:
**13.12.2006 Bulletin 2006/50**

(73) Proprietor: **Borealis Technology Oy**
**06101 Porvoo (FI)**

(72) Inventors:
• **Smedberg, Annika**
**471 56 Myggenäs (SE)**
• **Boström, Jan-Ove**
**444 96 Ödsmal (SE)**
• **Eklind, Hans**
**44445 Stenungsund (SE)**

(74) Representative: **Kador & Partner PartG mbB**
**Corneliusstraße 15**
**80469 München (DE)**

(56) References cited:
WO-A-85/05216          WO-A-99/31675
WO-A1-95/04761          WO-A1-99/31675
US-A- 3 941 859          US-A- 4 305 849
US-A- 4 812 505          US-A- 5 371 145
US-A- 5 405 901          US-A- 5 420 185
US-A- 5 718 974          US-A- 5 731 082
US-A1- 2003 042 658          US-B1- 6 329 054
US-B1- 6 441 309          US-B1- 6 455 602
US-B1- 6 582 795          US-B2- 6 825 253
US-B2- 6 869 995

• **"EXACT Plastomers Grade Slate and Product Guide", ExxonMobil Chemical, 2006, pages 1-6, XP055310891, & "Engage 8200 Polyolefin Elastomer Technical Information", DOW Chemical,**
• **Experimental Report by K.M. Seven dated 19.03.2018**
• **"CHAPTER 2 VISCOSITY NORMAL TRESS DIFFERENCES" In: JOHN M. DEALY ET AL: "Melt Rheology and its Applications in the Plastics Industry", XP055480854, ISBN: 9789400763944 pages 22-47,**

EP 1 731 565 B2

**Description**

The present invention relates to a multilayered power cable with an insulation layer comprising a polymer composition.

A typical electric power cable generally comprises one or more conductors in a cable core that is surrounded by several layers of polymeric materials including an inner semiconducting layer, followed by an insulating layer, and then an outer semiconducting layer. These layers are normally crosslinked. To these layers, further layers may be added, such as a metallic tape or wire shield, and finally a jacketing layer. The layers of the cable are based on different types of polymers.

A limitation of polyolefins is their tendency to be exposed, in the presence of water and under the action of strong electric fields, to the formation of bush-shaped defects, so-called water trees, which can lead to lower breakdown strength and possibly electric failure. This tendency is strongly affected by the presence of inhomogeneities, microcavities and impurities in the material. Water treeing is a phenomenon that has been studied carefully since the 1970's

In electrically strained polymer materials, subjected to the presence of water, processes can occur which are characterized as "water treeing". It is known that insulated cables suffer from shortened service life when installed in an environment where the polymer is exposed to water, e.g. under ground or at locations of high humidity.

The appearance of water tree structures are manifold. In principle, it is possible to differentiate between two types:

- "Vented trees" which have their starting point on the surface of the material extending into the insulation material and

- "Bow-tie trees" which are formed within the insulation material.

The water tree structure constitutes local damage leading to reduced dielectric strength.

Common polymeric materials for wire and cable applications are preferably made from polyethylene homopolymers, ethylene-propylene-elastomers, otherwise known as ethylene-propylene-rubber (EPR), or polypropylene.

Polyethylene is generally used without a filler as an electrical insulation material as it has good dielectric properties, especially high breakdown strength and low power factor. However, polyethylene homopolymers are prone to "water-treeing" when water is present.

The expected life time of an installed cable is more than 30 years. If a cable has an electrical breakdown the affected part of the cable has to be replaced. The costs of the cable are low compared to costs arising by a repair of the damaged part of the cable. Therefore it is of interest to find solutions that offer better water treeing properties that then prolong the service life of the cable if it is exposed to wet or humid environments.

Many solutions have been proposed for increasing the resistance of insulating materials to degradation by water-treeing. One solution involves the addition of polyethylene glycol, as water-tree growth inhibitor to a low density polyethylene such as described in US 4,305,849 and US 4,812,505. Furthermore, the invention WO 99/31675 discloses a combination of specific glycerol fatty acid esters and polyethylene glycols as additives to polyethylene for improving water-tree resistance. Another solution is presented in WO 85/05216 which describes copolymer blends. The low-density polyethylene base resins used in the prior art documents for preparing insulating materials are unimodal.

US 6,582,795 describes polymer compositions for films comprising a bimodal polyethylene and ethylene/(meth)acrylate copolymers.

Moreover, the compositions used most in this technical field are crosslinked. Crosslinking can be effected by adding free-radical forming agents like peroxides to the polymeric material prior to or during extrusion (for example cable extrusion). The free-radical forming agent should preferably remain stable during extrusion, performed at a temperature low enough to minimize the early decomposition of the peroxide but high enough to obtain proper melting and homogenisation. Furthermore, the crosslinking agent should decompose in a subsequent crosslinking step at elevated temperature. If e.g. a significant amount of peroxide already decomposes in the extruder, thereby initiating premature crosslinking, this will result in the formation of so-called "scorch", i.e. inhomogeneity, surface unevenness and possibly discolouration in the different layers of the resultant cable. Thus, any significant decomposition of free-radical forming agents during extrusion should be avoided. On the other hand, thermal treatment at the elevated temperature of the extruded polyolefin layer should result in high crosslinking degree and high crosslinking efficiency.

Another important aspect for the manufacturing of cables is to have insulation layers of constant thickness. Therefore, it is necessary to have good melt strength. If the melt strength is too low, this will result in a cable having a pear shaped appearance. An insulation layer having high fluctuations in thickness is not acceptable from an electrical point of view. However, an improvement of melt strength must not be reached on the expense of resistance to water treeing.

The object of the present invention according to claims 1 to 17 is therefore to provide a new insulation layer of a multilayered power cable comprising a polymer composition that offers a combination of improved processability in combination with improved water-tree resistance.

Still another objectis to provide an insulation layer of a multilayered power cable having low fluctuations in thickness.

These objects are solved by providing a multilayered power cable according to claim 1.

The polyolefin base resin will now be described in further detail.

It is an essential feature of the present invention that the polyolefin base resin comprises at least two olefin homo- or copolymer fractions which differ in weight average molecular weight.

As will be discussed later in more detail, the multimodal polyolefin base resin is obtainable by mechanical blending of the different components or by insitu blending during the polymerisation process. The multimodal polymer may be produced in a sequential multistage process or through polymerisation in one single polymerisation step with the aid of a dual site (coordination) catalyst or a blend of different (coordination) catalysts.

Usually, a polyolefin composition comprising at least two olefin homo- or copolymer fractions having different molecular weight distributions and different weight average molecular weights is referred to as "multimodal". The prefix "multi" relates to the number of polymer fractions with different molecular weight distributions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the different fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Within the context of the present invention, the polyolefin base resin may even have three different olefin homo- or copolymer fractions which differ in weight average molecular weight, thereby resulting in a trimodal polyolefin. Preferably, the polyolefin is bimodal.

The blending or modality can also have effects on other types of distributions such as the composition distribution.

Preferably, the first olefin homo- or copolymer fraction (a1), i.e. the fraction of lower molecular weight, has a density of 0.860 to 0.945 g/cm$^3$. More preferably, the density is within the range of 0.870-0.940 g/cm$^3$, even more preferably 0.885-0.935 g/cm$^3$.

In a preferred embodiment, the first fraction (a1) has a melt flow rate $MFR_{2.16kg/190°C}$ of 1 to 800 g/10 min. More preferably, $MFR_{2.16kg/190°C}$ of the first fraction is 25 to 600 g/10 min, even more preferably 40 to 500 g/10 min.

Preferably, the second olefin homo- or copolymer fraction (a2), i.e. the fraction of higher molecular weight, has a density of 0.860 to 0.945 g/cm$^3$. More preferably, the density is 0.865 -0.935 g/cm$^3$, even more preferably 0.870 -0.925 g/cm$^3$.

In a preferred embodiment, the second fraction (a2) has a melt flow rate $MFR_{2.16kg/190°C}$ of 0.001 to 5 g/10 min. Even more preferred, $MFR_{2.16kg/190°C}$ is 0.01 to 5 g/10 min, 0.01-3 g/10 min, 0.1-3 g/10 min, or 0.1-2 g/10 min.

Preferably, the olefin homo- or copolymers of the first and second fraction are ethylene homo- or copolymers. Within the context of the present invention, it is possible that both fractions are either homopolymers or copolymers. However, it is also possible, that one fraction is a homopolymer whereas the other fraction is a copolymer. Preferably, at least two fractions are olefin copolymers.

Within the context of the present invention, an olefin homopolymer is defined to have at least 99 wt%, even more preferably at least 99.5 wt% and most preferably at least 99.8 wt% olefin monomer units.

The first and/or second fraction is preferably an ethylene copolymer prepared by copolymerization of ethylene with at least one comonomer selected from $C_3$ to $C_{20}$ alpha-olefins.

In a preferred embodiment, both fractions are ethylene copolymers prepared by copolymerization of ethylene with at least one comonomer selected from $C_3$ to $C_{20}$ alpha-olefins such as propylene, 1-butene, 4-methyl-1-pentene, 1-hexene, 1-octene or 1-nonene, or mixtures thereof.

In the multimodal ethylene copolymer of the invention the low molecular weight fraction preferably comprises 30-70% preferably 30-60% by weight of the multimodal ethylene copolymer, and correspondingly, the high molecular weight fraction comprises 70-30 preferably 70 - 40 % by weight.

Preferably, the polyolefin base resin comprising the first and second olefin homo- or copolymer fraction has a melt flow rate $MFR_{2.16kg/190°C}$ of 0.1 to 15.0 g/10 min. More preferably, $MFR_{2.16kg/190°C}$ of the polyolefin is 0.2 to 10 g/10 min, even more preferably 0.3 to 7 g/10 min.

Preferably, the polyolefin has a molecular weight distribution $M_w/M_n$ of at least 3, more preferably of at least 3.5, even more preferably of at least 4. More preferably, $M_w/M_n$ of the polyolefin base resin is within the range of 4 to 15, 4 to 12, or 4 to 10.

The density of the polyolefin base resin is preferably from 0.860 to 0.945 g/cm$^3$, more preferably 0.870 to 0.940

$g/cm^3$, even more preferably from 0.880 to 0.935 $g/cm^3$, or from 0.885 to 925 $g/cm^3$.

The amount of polymer eluting at a temperature higher than 90 °C should be less than 15, preferably less than 12, less than 10 , less than 7, or less than 5 wt-% as measured by TREF (Temperature Rising Elution Fractionation). TREF was measured as described in the publication of L. Wild, T.R. Ryle, D.C. Knobeloch, E.R. Peak in Journal of Polymer Science; Polymer Physics Edition, Vol. 20, p. 441-455, 1982.

In the present invention the polyolefin is preferably a polyethylene. In a preferred embodiment, the polyethylene contains at least 60 wt-% ethylene monomer units. In other preferred embodiments, the polyethylene contains at least 70 wt-%, at least 80 wt-% or at least 90 wt-% ethylene monomer units.

A further essential feature of the polymer composition is the presence of at least one additive (b) selected from a polar copolymer; and a low density polyethylene.

In the present invention, it is sufficient to add one of these additives only. However, it is also possible to add any mixture of these additives.

Preferably, the one or more additives listed above are present in an amount of 0.05 to 60 wt%, based on the weight of the polymer composition, more preferably 0.1-40 wt% and more preferably 0.15 to 35 wt%..

The additives (b) mentioned above are now discussed in further detail.

Within the context of the present invention, a polar copolymer is defined to be any copolymer having units derived from a polar comonomer. Preferably, as a polar comonomer, compounds containing hydroxyl groups, alkoxy groups, carbonyl groups, carboxyl groups, and ester groups, are used.

More preferably, compounds containing carboxyl and/or ester groups are used and still more preferably, the compound is selected from acrylates, methacrylates and acetates.

Still more preferably, the polar comonomer is selected from the group of alkyl acrylates, alkyl methacrylates, and vinyl acetate. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate.

For example, polar monomer units may be selected from the group of alkylesters of (meth)acrylic acid such as methyl, ethyl and butyl(meth)acrylate and vinylacetate. The acrylate type of polar comonomer is preferred over acetates due to their better resistance to thermal degradation at high temperatures.

Preferably, the polar copolymer is prepared by copolymerizing an olefin monomer and a polar comonomer.

In a preferred embodiment, the olefin monomer is selected from ethylene or $C_3$ to $C_{20}$ alpha-olefins such as propylene, 1-butene, 4-methyl-1-pentene, 1-hexene, 1-octene or 1-nonene, or mixtures thereof. Even more preferred, the olefin monomer is ethylene.

Preferably, the polar copolymer has an amount of units derived from the polar comonomer of less than 3000, less than 2500, less than 2000 or less than 1700 micromoles per gram of polar copolymer. Preferred ranges are from 1 to 3000 micromoles per gram of polar copolymer, 10 to 2500, 15 to 2000, or 30 to 1700 micromoles per gram of polar copolymer.

In a preferred embodiment, the polar copolymer is prepared by copolymerization of ethylene with at least one comonomer selected from $C_1$ to $C_6$ alkyl acrylates or methacrylates, optionally in the presence of further comonomers selected from $C_3$ to $C_{20}$ alpha-olefins such as propylene, 1-butene, 4-methyl-1-pentene, 1-hexene, 1-octene or 1-nonene, or mixtures thereof.

Preferably, the polar copolymer has a melt flow rate $MFR_{2.16/190°C}$ in the range of 0.1 to 70 g/10 min, more preferably 0.5-55 g/10 min, even more preferably 1.0-40g/10min.

When the polar copolymer is prepared by copolymerizing an olefin such as ethylene with a polar comonomer, optionally in the presence of a $C_3$ to $C_{20}$ alpha-olefin comonomer, this is preferably effected in a high pressure process resulting in low density polyethylene or in a low pressure process in the presence of a catalyst, for example a chromium, Ziegler-Natta or single-site catalyst resulting in either unimodal or multimodal polyethylene. Most preferred is high pressure polymerisation.

The multimodal polymer is preferably produced in a multi-stage process in a multi-step reaction sequence such as described in WO92/12182.

When preparing the polar ethylene copolymer in a high pressure process, polymerization is generally performed at a pressure of 1200 to 3500 bars and a temperature of 150 to 350°C. Typically it is prepared in the high pressure process including free radical initiated polymerisation.

A further additive of the present invention that can be added to the polyolefin is a low-density polyethylene. As already indicated above, it is possible to add the low-density polyethylene only or to add the low density polyethylene in combination with any other additive (b).

Preferably, the low-density polyethylene has a density of less than 0.935 $g/cm^3$. More preferably, the low-density polyethylene has a density of less than 0.930 $g/cm^3$.

The low-density polyethylene can be an ethylene homopolymer or copolymer. Within the context of the present invention, an ethylene homopolymer is preferably defined to have at least 99 wt%, more preferably at least 99.5 wt% and most preferably at least 99.8 wt% olefin monomer units.

In a preferred embodiment, the low-density polyethylene comprises units derived from a $C_3$ to $C_{20}$ alpha-olefin comonomer such as propylene, 1-butene, 4-methyl-1-pentene, 1-hexene, 1-octene or 1-nonene, or mixtures thereof.

Preferably, the low-density polyolefin comprises units derived from a polar comonomer, optionally in combination with $C_3$ to $C_{20}$ alpha-olefin comonomer units. As polar comonomers, those can be mentioned which have already been listed above. If polar comonomers are used, the amount of units derived therefrom within the low-density polyethylene is preferably less than 3000, less than 2500, less than 2000 or less than 1700 micromoles per gram of low-density polyolefin. Preferred ranges are from 1 to 3000 micromoles per gram of low-density polyolefin, 10 to 2500, 15 to 2000, or 30 to 1700 micromoles per gram of low-density polyolefin.

The low-density polyethylene is preferably prepared by high pressure radical polymerization. Such a process is generally performed at a pressure of 1200 to 3500 bars and a temperature of 150 to 350°C.

The polyolefin base resin (a) and the one or more additives (b) can be blended to the polymer composition of the present invention by any commonly known blending technique.

Preferably, the polymer composition of the present invention has a shear thinning index $SHI_{0/100}$ at 135°C of at least 3. More preferably, $SHI_{0/100}$ at 135°C is at least 3.2, at least 3.5, at least 3.7, or at least 4. Furthermore, it is preferred that the polymer composition of the present invention has a shear thinning index $SHI_{1/100}$ at 135°C of at least 2.9. More preferably, $SHI_{1/100}$ at 135°C is at least 3.0, at least 3.2, at least 3.5, or at least 3.7. In general, SHI is the ratio of viscosities at two different shear stresses. In the present invention, shear thinning index complies with the following equations:

$$SHI_{0/100} = \eta_0/\eta_{100}$$

and

$$SHI_{1/100} = \eta_1/\eta_{100}$$

where

$\eta_0$ is the zero shear rate complex viscosity, and
$\eta_1$ is the complex viscosity at the complex modulus $G^* = 1$ kPa.
$\eta_{100}$ is the complex viscosity at the complex modulus $G^* = 100$ kPa.

In general, shear thinning index is related to the molecular weight distribution as well as to the long chain branch content. High SHI values indicate a broad molecular weight distribution. SHI also indicates how strongly viscosity is changing with increasing shear rate. Further details about the measurement of $SHI_{0/100}$ and $SHI_{1/100}$ are provided below in the examples.

In a preferred embodiment, the polymer composition has a viscosity $\eta_0$ at zero shear rate of at least 10000 Pa*s, measured at 135°C. The viscosity $\eta_0$ at zero shear rate is related to melt strength, i.e. melt strength increases with increasing $\eta_0$ values. The polymer composition has a viscosity $\eta_1$ at the complex modulus $G^*=1$ kPa of at least 9950 Pa*s, measured at 135°C.

Preferably, the polymer composition comprises less than 1000 micromoles of polar comonomer units per gram of the polymer composition, preferably less than 900, less than 800, less than 600, or less than 500 micromoles of polar comonomer units per gram of the polymer composition.

If expressed in weight percent, it is preferred to have less than 60 wt%, less than 50 wt%, less than 40 wt%, or less than 35 wt% of the polar copolymer component or the low-density polyethylene in the polymer composition.

Besides the one or more additives (b) already discussed above, the polymer composition may comprise optional additives which will be discussed below.

An optional additive that can be mentioned is a crosslinking agent. In the context of the present invention, a crosslinking agent is defined to be any compound capable of generating radicals which can initiate a crosslinking reaction. Preferably, the crosslinking agent contains at least one -O-O- bond or at least one -N=N- bond. More preferably, the crosslinking agent is a peroxide known in the field.

The crosslinking agent, e.g. a peroxide, is preferably added in an amount of 0.1-3.0 wt.-%, more preferably 0.15-2.6 wt.-%, most preferably 0.2-2.2 wt.-%, based on the weight of the polymer composition.

As peroxides used for crosslinking, the following compounds can be mentioned: di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxyisopropyl)benzene, butyl-4,4-bis(tert-butylperoxy)valerate, 1,1-bis(tert-butylperoxy)-3,3,5-trimethylcyclohexane, tert-butylperoxybenzoate, dibenzoylperoxide.

Preferably, the peroxide is selected from 2,5-di(tert-butylperoxy)-2,5-dimethylhexane, di(tert-butylperoxy-isopropyl)benzene, dicumylperoxide, tert-butylcumylperoxide, di(tert-butyl)peroxide, or mixtures thereof. Most preferably, the peroxide is dicumylperoxide.

Another optional additive is a scorch retarder. In the context of the present invention, a "scorch retarder" is defined to be a compound that reduces the formation of scorch during extrusion of a polymer composition, at typical extrusion temperatures used, if compared to the same polymer composition extruded without said compound. Besides scorch retarding properties, the scorch retarder may simultaneously result in further effects like boosting, i.e. enhancing crosslinking performance during the crosslinking step.

Preferably, the scorch retarder is selected from 2,4-diphenyl-4-methyl-1-pentene, substituted or unsubstituted diphenylethylene, quinone derivatives, hydroquinone derivatives, monofunctional vinyl containing esters and ethers, or mixtures thereof. More preferably, the scorch retarder is selected from 2,4-diphenyl-4-methyl-1-pentene, substituted or unsubstituted diphenylethylene, or mixtures thereof. Most preferably, the scorch retarder is 2,4-diphenyl-4-methyl-1-pentene.

Preferably, the amount of scorch retarder is within the range of 0.005 to 1.0 wt.-%, more preferably within the range of 0.01 to 0.8 wt.-%, based on the weight of the polymer composition. Further preferred ranges are 0.03 to 0.75 wt-%, 0.05 to 0.70 wt-% and 0.07 to 0.50 wt-%, based on the weight of the polymer composition.

The polymer composition may contain further optional additives, such as antioxidants, stabilisers, processing aids, and/or crosslinking boosters. As antioxidant, sterically hindered or semi-hindered phenols, aromatic amines, aliphatic sterically hindered amines, organic phosphates, thio compounds, and mixtures thereof, can be mentioned. Typical crosslinking boosters may include compounds having an allyl group, e.g. triallylcyanurate, triallylisocyanurate, and di-, tri- or tetra-acrylates. As further additives, flame retardant additives, acid scavengers, inorganic fillers and voltage stabilizers can be mentioned.

If an antioxidant, optionally a mixture of two or more antioxidants, is used, the added amount can range from 0.005 to 2.5 wt-%, based on the weight of the polymer composition. If the polyolefin base resin (a) of the polymer composition is an ethylene homo- or copolymer, the antioxidant(s) are preferably added in an amount of 0.005 to 0.8 wt-%, more preferably 0.01 to 0.60 wt-%, even more preferably 0.05 to 0.50 wt-%, based on the weight of the polymer composition. If the polyolefin base resin (a) is a propylene homo- or copolymer, the antioxidant(s) are preferably added in an amount of 0.005 to 2 wt-%, more preferably 0.01 to 1.5 wt-%, even more preferably 0.05 to 1 wt-%, based on the weight of the polymer composition.

Further additives may be present in an amount of 0.005 to 3 wt%, more preferably 0.005 to 2 wt%, based on the weight of the polymer composition. Flame retardant additives and inorganic fillers can be added in higher amounts.

From the polymer composition described above, a crosslinked composition can be prepared by blending with a crosslinking agent, followed by treatment under crosslinking conditions, thereby increasing the crosslinking level. Crosslinking can be effected by treatment at increased temperature, e.g. at a temperature of at least 160°C. When peroxides are used, crosslinking is generally initiated by increasing the temperature to the decomposition temperature of the corresponding peroxide. When the peroxide decomposes, radicals are generated from the peroxide. These radicals then intitiate the crosslinking reaction.

Preferably, crosslinking treatment results in a polymer composition having a hot set elongation value of less than 175 %, more preferably less than 100 %, even more preferably less than 90 %, determined according to IEC 60811-2-1. Hot set elongation values are related to the degree of crosslinking. The lower the hot set elongation value, the more crosslinked is the material.

Increasing the electric field applied to an insulation system, the dielectric material will get an electrical breakdown at a certain value, the so-called breakdown strength. This involves a destructive sudden flow of current leading to a conductive path through the dielectric material, which cannot any longer support an applied voltage.

A dielectric usually is being used at nominal field well below the breakdown strength, but different kind of degradation processes (ageing), for example water treeing, may reduce the breakdown strength over time, possibly to such low levels that the system fails during service.

There are numerous ways to evaluate the resistance of the insualting material to water tree degradation. In the present invention, the method is based on model cables consisting of an inner semiconductive layer, insulation layer and an outer semiconductive layer. The insulation has a thickness of 1.5 mm. The ageing conditions are 9 kV/mm, 50 Hz, 85°C in the water filled conductor area, 70°C in the surrounding water, and an ageing time of 1000 h. The breakdown strength of these model cables is determined before and after ageing. As shown below in the examples, assessment of water tree retarding properties of a polymeric material can be made on the basis of electric breakdown strength measurements after ageing in water. Polymers still having high breakdown strength after ageing in water are considered to have an improved resistance to the formation of water trees.

In a preferred embodiment, the polymer composition has an electric breakdown strength of at least 36 kV/mm after 1000 h wet ageing at the ageing conditions described in this section. More preferably, the electric breakdown strength is at least 40, or at least 45 kV/mm. The semiconductive material used in the model cable test, both as inner and outer semicon, could be described in the following way: a poly(ethylene-co-butylacrylate) polymer with a butylacrylate content of 1300 micromoles containing 40 wt% of a conductive furnace black. The composition is stabilised with an antioxidant of the polyquinoline type and contains 1 wt% of a peroxide as a crosslinking agent.

From the insulation layer of the present invention, a multilayered cable can be prepared wherein at least one layer comprises said insulation layer. When crosslinking is initiated, a crosslinked multilayered article is obtained. Preferably, the multilayered cable (either crosslinked or not) is a a power cable.

In the context of the present invention, a power cable is defined to be a cable transferring energy operating at any voltage. The voltage applied to the power cable can be alternating (AC), direct (DC), or transient (impulse). In a preferred embodiment, the multilayered article is a power cable operating at voltages higher than 1 kV. In other preferred embodiments, the power cable prepared according to the present invention is operating at voltages higher than 6 kV, higher than 10 kV or higher than 33 kV.

The multilayered article can be prepared in a process wherein the polymer composition of the present invention, in combination with a crosslinking agent, is applied onto a substrate by extrusion. In such an extrusion process, the sequence of mixing the components of the polymer composition can be varied, as explained below. In the following examples about the blending sequence, reference is made to the additive (b) in general. However, the following statements are applicable to any of the additives (b), i.e. the polar copolymer, the ether and/or ester group containing additives, the low density polyethylene, or mixtures thereof.

Within the context of the present invention, the first olefin homo- or copolymer fraction and the second olefin homo- or copolymer fraction are either fed to the extruder separately or, as an alternative, are blended first, e.g. by mechanical blending or in situ reactor blending, to result in the polyolefin base resin which is then fed to the extruder.

According to a preferred embodiment, the polyolefin base resin and one or more additives (b) are mixed with each other and with one or more antioxidants, possibly in combination with further additives, either on solid pellets or powder of the different polymer components or by melt mixing, followed by forming pellets from the melt. Subsequently, the crosslinking agent, preferably a peroxide, and optionally a scorch retarder and/or a crosslinking booster are added to the pellets or powder in a second step. Alternatively, the scorch retarder and/or crosslinking booster could already be added in the first step, together with the antioxidant(s). The final pellets are fed to the extruder, e.g. a cable extruder.

According to another preferred embodiment, instead of a two-step process, the polyolefin base resin and one or more additives (b), preferably in the form of pellets or powder, the antioxidant(s) and crosslinking agent, and optionally a scorch retarder and/or further additives such as a crosslinking booster, are added to a compounding extruder, single or twin screw. Preferably, the compounding extruder is operated under careful temperature control.

According to another preferred embodiment, a mix of all components, i.e. including antioxidant(s) and crosslinking agent and optionally a scorch retarder and/or further additives such as a crosslinking booster, are added onto the pellets or powder made of the polyolefin base resin and one or more additives (b).

According to another preferred embodiment, pellets made of the polyolefin base resin and one or more additives (b), optionally further containing antioxidant(s) and additional additives, are prepared in a first step, e.g. by melt mixing. These pellets, obtained from the melt mixing, are then fed into the cable extruder. Subsequently, crosslinking agent and optionally a scorch retarder and/or a crosslinking booster are either fed in the hopper or directly into the cable extruder. Alternatively, crosslinking agent and/or scorch retarder and/or crosslinking booster are already added to the pellets before feeding these pellets into the cable extruder.

According to another preferred embodiment, pellets made of the polyolefin base resin and one or more additives (b) without any additional components are fed to the extruder. Subsequently, antioxidant(s) and crosslinking agent and optionally a scorch retarder, optionally in combination with further additives such as a crosslinking booster, are either fed in the hopper or directly fed into the polymeric melt within the cable extruder. One or more additives (b) could be added in this step instead, together with the antioxidant(s), crosslinking agent, scorch retarder and the other additives used. Alternatively, at least one of these components, i.e. crosslinking agent, scorch retarder, crosslinking booster, antioxidant(s), or a mixture of these components is already added to the pellets before feeding these pellets into the cable extruder.

According to another preferred embodiment, a highly concentrated master batch is prepared. The master batch may comprise one or more of the following components: antioxidant(s), scorch retarder and/or crosslinking booster and crosslinking agent. One or more additives (b) can also be provided in a master batch. Furthermore, it is possible to provide each of the additives mentioned above in a separate master batch. The one or more master batches are then added to or mixed with the polyolefin base resin and optionally one or more additives (b), if not already provided in a master batch. If there is any component not added through the masterbatch, that component either has to be present in the pellets or powder used from the start or it has to be added separately prior to or during the extrusion process.

When producing a power cable by extrusion, the polymer composition can be applied onto the metallic conductor and/or at least one coating layer thereof, e.g. a semiconductive layer or insulating layer. Typical extrusion conditions are mentioned in WO 93/08222.

The present invention also provides a process for the preparation of the polymer composition described above, comprising at least the following steps in any sequence:

(i) providing the polyolefin base resin (a) having at least a first and second olefin homo- or copolymer fraction, wherein the first fraction (a1) has a lower weight average molecular weight than the second fraction (a2),

(ii) providing at least one additive selected from a polar copolymer; and a low density polyethylene; and

(iii) blending the polyolefin base resin and the one or more additives.

As already discussed above, in case of two polyolefin fractions both polyolefin fractions can be homopolymers. However, preferably at least one fraction is an olefin copolymer fraction. More preferably, both polyolefin fractions are copolymer fractions.

Preferably, the first and/or the second olefin homo- or copolymer fraction is/are ethylene homo- or copolymer fractions.

As polymerisation catalysts, any conventional coordination catalyst including Ziegler-Natta, chromium, or single site catalysts, including metallocene and non-metallocene, may be used, preferably Ziegler-Natta or single site catalysts, including metallocene or non-metallocene catalysts.

The polymer composition according the invention is preferably produced such that at least one of the polyolefin fractions (a1) and (a2), preferably the fraction (a2) of higher molecular weight, is produced in a gas-phase reaction.

Further preferred, at least one of the olefin homo- or copolymer fractions (a1) and (a2), preferably the lower molecular weight fraction (a1), is produced in a slurry reactor, preferably in a loop reactor, and one of the fractions (a1) and (a2), preferably fraction (a2), is produced in a gas-phase reactor.

Further, the polyolefin base resin is preferably produced in a multistage process.

A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst.

Accordingly, it is preferred that fraction (a1) and (a2) of the polyolefin base resin are produced in different stages of a multistage process.

With regard to multistage processes, the following process types could be mentioned: solution, slurry, gas phase. Within the context of the present invention, any process type can be chosen. Furthermore, any combination of the process types can be chosen in any sequence.

Preferably, the multistage process comprises at least one gas phase stage in which, preferably, fraction (a2) is produced.

Further preferred, fraction (a2) is produced in a subsequent stage in the presence of fraction (a1) which has been produced in a previous stage.

For example, in the production of, say, a bimodal polyethylene, a first ethylene homo- or copolymer fraction is produced in a first reactor under certain conditions with respect to hydrogen-gas concentration, temperature, pressure, and so forth. After the polymerisation in the first reactor, the polymer fraction including the catalyst is separated from the reaction mixture and transferred to a second reactor, where further polymerisation takes place under different conditions.

It is previously known to produce multimodal, in particular bimodal, olefin polymers, such as multimodal polyethylene, in a multistage process comprising two or more reactors connected in series. As instance of this prior art, mention may be made of EP 517 868, as a preferred multistage process for the production of the polyethylene composition according to the invention.

Preferably, the main polymerisation stages of the multistage process are such as described in EP 517 868, i.e. the production of fractions (a1) and (a2) is carried out as a combination of slurry polymerisation for fraction (a1)/gas-phase polymerisation for fraction (a2). The slurry polymerisation is preferably performed in a so-called loop reactor. Further preferred, the slurry polymerisation stage preceeds the gas phase stage.

Optionally, the main polymerisation stages may be preceded by a prepolymerisation, in which case up to 20 % by weight, preferably 1 to 10 % by weight, more preferably 1 to 5 % by weight, of the total base resin is produced. The prepolymer is preferably an ethylene homopolymer or copolymer. At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

The polar copolymer can be prepared as described above.

The low-density polyethylene is preferably obtained by a high pressure polymerization process as described above.

**Examples**

Testing methods/measuring methods

(a) Density measurements

Density was determined according to ISO 1183.

(b) Elastograph measurements of the degree of crosslinking

The degree of crosslinking was determined on a Göttfert Elastograph™. The measurements were carried out using press-moulded circular plaques. First, a circular plaque was pressed at 120°C, 2 min. without pressure, followed by 2 min. at 5 tons. Then, the circular plaque was cooled to room temperature. In the Elastograph, the evolution of the torque is measured as a function of crosslinking time at 180°C. In the torque measurements which are carried out as explained above, the evolution of the torque as a function of time is monitored. The reported torque values are those reached after 10 minutes of crosslinking at 180°C.

(c) Measurement of hot set and permanent deformation

Hot set elongation and permanent deformation are determined on crosslinked plaques. These plaques are prepared as follows: First, the pellets were melted at 115°C at around 10 bar for 2 minutes. Then the pressure was increased to 200 bar, followed by ramping the temperature up to 165°C. The material was kept at 165°C for 25 minutes and after that it was cooled down to room temperature at a cooling rate of 15°C/min. The thickness of the plaque was around 1.8 mm.

The hot set elongation as well as the permanent deformation were determined on samples taken from the crosslinked plaques. These properties were determined according to IEC 60811-2-1. In the hot set test, a dumbbell of the tested material is equipped with a weight corresponding to 20 N/cm$^2$. This specimen is put into an oven at 200°C and after 15 minutes, the elongation is measured. Subsequently, the weight is removed and the sample is allowed to relax for 5 minutes. Then, the sample is taken out from the oven and is cooled down to room temperature. The permanent deformation is determined.

(d) Melt flow rate

The melt flow rate is equivalent to the term "melt index" and is determined according to ISO 1133 and is indicated in g/10 min. Melt flow rate is determined at different loadings, such as 2.16 kg (MFR$_2$). Melt flow rate is determined at a temperature of 190°C.

(e) Wet ageing test

The wet ageing test is based on a procedure described in an article by Land H.G. and Schädlich H., "Model Cable Test for Evaluating the Ageing Behaviour under Water Influence of Compounds for Medium Voltage Cables", Conference Proceedings of Jicable 91, June 24 to 28, 1991, Versaille, France.

The wet ageing properties were evaluated on (model cables) minicables. These cables consist of a Cu wire onto which an inner semiconductive layer, an insulation layer and an outer semiconductive layer are applied. The model cable has the following construction: inner semiconductive layer of 0.7 mm, insulation layer of 1.5 mm and outer semiconductive layer of 0.15 mm. The cables are extruded and vulcanised, i.e. the material is crosslinked. After this the model cables are preconditioned at 80°C for 72h.

The Cu wire is removed and then replaced by a thinner Cu wire. The cables are put into water bath to be aged for 1000 h under electric stress and at a temperature of 70°C of the surrounding water and at a temperature of the water in the conductor area of 85 °C. The initial breakdown strength as well as the breakdown strength after 1000 h wet ageing are determined.

The cables are prepared and aged as described below.

| Preconditioning: | 80°C, 72 h |
| Applied voltage: | 9 kV/50 Hz |
| Electric stress (max.): | 9 kV/mm |
| Electric stress (mean): | 6 kV/mm |
| Conductor temperature: | 85°C |
| Water bath temperature: | 70°C |
| Ageing time: | 1000 h |
| Deionized water in conductor and outside: | if not otherwise stated |

Five specimens with 0.50 m active length from each cable were aged.

The specimens were subjected to ac breakdown tests (voltage ramp: 100 kV/min.) and the Weibull 63.2 % values of the breakdown strength (field stress at the inner semiconductive layer) are determined before and after ageing.

(f) Tree count after wet ageing

10 slices of 0.50 mm thickness are cut at the breakdown channel of two aged cable specimens. These slices are stained with methylene-blue according to the procedure described in IEEE Transactions on Electrical Insulation, Oct 1984, page 443. The slices are then inspected at 100 times magnification using a light transmission microscope. The following parameters are determined for each slice:

• The length of the longest bow-tie tree, in $\mu$m.

• The length of the longest vented tree from the conductor screen, in $\mu$m.

• The number of vented trees (> 5 $\mu$m) from the conductor screen, per slice

• The number of bow-tie trees (> 5 $\mu$m), per slice

After inspection on the two specimens, the following parameters are calculated and reported:

• The longest found bow-tie tree in the cable, in $\mu$m

• The longest found vented tree from the conductor screen in the cable, in $\mu$m

• The density of bow-tie trees, in $mm^{-3}$

• The density of vented trees from conductor screen, in $mm^{-2}$

(g) Measurement of extrusion properties

These were determined on a Brabender extruder using 42 rpm and the temperature settings as described in the table 8. The screw used was a 19/20D and with a compression 4:1. The melt pressure was determined before the die.

(h) Viscosity at different shear rates and shear thinning index

$$\eta_0 = \text{complex zero viscosity (extrapolated)}$$

$$\eta_1 = \text{complex viscosity } \eta^* \text{ at complex modulus } G^* \text{ of 1 kPa}$$

$$\eta_{100} = \text{complex viscosity } \eta^* \text{ at complex modulus } G^* \text{ of 100 kPa}$$

$$SHI_{0/100} = \eta_0/\eta_{100}$$

$$SHI_{1/100} = \eta_1/\eta_{100}$$

The rheology of polymers and polymer compositions have been determined using Rheometrics RDA II Dynamic Rheometer. These dynamic rheology measurements have been carried out at 135°C under nitrogen atmosphere. The measurements give storage modulus (G') and loss modulus (G") together with absolute value of complex viscosity ($\eta^*$) as a function of frequency ($\omega$) or absolute value of complex modulus (G*).

$$\eta^* = \sqrt{(G'^2 + G''^2)}/\omega$$

$$G^* = \sqrt{(G'^2 + G''^2)}$$

According to the Cox-Merz rule, complex viscosity function, $\eta^*(\omega)$ is the same as conventional viscosity function (viscosity as a function of shear rate), if frequency is taken in rad/s. If this empiric equation is valid, the absolute value of complex modulus corresponds to shear stress in conventional (that is steady state) viscosity measurements. This means that function $\eta^*(G^*)$ is the same as viscosity as a function of shear stress.

In the present method, viscosity at a low shear stress or $\eta^*$ at a low G* (which serve as an approximation of so called zero viscosity ($\eta_0$)) is used as a measure of average molecular weight and is an indication of the melt strength. On the other hand, shear thinning, that is the decrease of viscosity with G*, gets more pronounced the broader is molecular weight distribution. This property can be approximated by defining a so called shear thinning index, SHI, as a ratio of viscosities at two different shear stresses. SHI can be used as an indication of the processability.

(i) Melt strength according haul-off measurements

The melt strength or haul-off was measured by using an apparatus consisting of a capillary rheometer of trademark 'Rosand RH-7', a haul-off device and a force transducer to measure the strength of the polymer melt. The inner diameter of the barrel is 15 mm, and is equipped with a fitting piston. A polymer sample was conditioned in the rheometer for 10 minutes at the temperature used for the measurement. Then the sample was extruded by means of a piston at piston velocity of 1 mm/min to press the melt vertically downwards through a cylindrical die having an opening inlet angle of 190 degrees, a diameter of 1 mm and a length of 16 mm. From the die, the monofilament passed essentially vertically down to the force measuring device, placed at a position of 25 cm below the die outlet. At this point the monofilament has solidified. The force measuring device consists of a free rolling wheel under which the monofilament passes free rotating wheel attached to a weighing device. The monofilament then passes the essentially vertically upwards onto one free rolling roller and wound onto the last roller. The draw off speed is determined by this last roller.

The force that is exerted upwards by the polymer upwards on the free rolling wheel is measured in grams. Then this value is divided by a factor of two to get the melt strength or haul-off value.

Thus, if the total force exerted upwards by the polymer monofilament on the wheel is 0.098 N, this is measured as 10 g, and this again corresponds to a melt strength or haul-off value of 5 g.

If a different draw off speed is used, usually the haul-off value will be different. The data are typically presented as force/melt strength against draw down speed. The temperature used for the measurement was 130 °C. The die used is 16/1. The piston speed was 1 mm/min and the barrel diameter 15 mm. The reported force is the average value of the minimum value and the maximum value. The force was recorded at 2 m/min.

(j) Molecular weight and molecular weight distribution

The molecular weights $M_w$ and $M_n$ are determined by High Temperature Size Exclusion Chromatography using 1,2,4-trichlorobensene as the eluent. The column set used consisted of three TosoHaas columns and narrow MWD polystyrenes and broad MWD polyethylenes were used for the calibration of the equipment. The temperature chosen for the measurement was 140°C.

(k) Amount of polar comonomer units within the polymer composition (either crosslinkable or crosslinked)

The calculation of the amount of polar comonomer units within the polymer composition is explained by making reference to the following example:

1 g formulation contains 23 wt-% of the polar ethylene copolymer. The polar ethylene copolymer contains 17 wt-% polar comonomer units. The molecular weight of the polar comonomer unit used ($M_{polar\ comonomer\ unit}$) has to be introduced, for example 86 g/mole for methylacrylate, and 128 g/mole for butylacrylate.

$$\frac{(1 \times 0.23 \times 0.17)}{128} = 305 \times 10^{-6}\ moles\,(or\ 305\ micromoles)$$

Tested materials and test results

Polyolefin base resin (a):

Polymer 1 is a polyethylene wherein both fractions (a1) and (a2) are ethylene copolymers. As a comonomer, 1-butene was used.

Additives (b)

Polymer 2 is a polar copolymer, obtained by copolymerization of ethylene and butyl acrylate.
Polymer 3 is a low-density polyethylene.
In a reference example, polyethylene glycol and a glycerol ester compound have been used.
Further details about the components and the formulations used in the tests are provided in Tables 1a to 2b.

**Table 1a.** Polyolefin base resin (a)

| Polymer | MFR$_{2.16,\ 190\ °C}$ (loop) (g/10 min) | MFR$_{2.16,\ 190°C}$ (final) (g/10 min) | Split | Mn(g/mole) | Mw(g/mole) | MWD | Density (kg/m$^3$) |
|---|---|---|---|---|---|---|---|
| Polymer 1 | 86 | 2.6 | 42/58 | 21500 | 92600 | 4.3 | 913 |

**Table 1b.** Polar copolymer and low-density polyethylene

| Polymer | MFR$_{2.16,190°C}$ (g/10min) | Acrylate type | Acrylate content (wt%) |
|---|---|---|---|
| Polymer 2 | $\approx 4$ | Butylacrylate | 21 (1640 micomoles) |
| Polymer 3 | $\approx 2$ | - | - |

**Table 2a.** Formulations tested in the rheology tests and extrusion tests

| Formulation | Polymer 1 (wt%) | Polymer 2 or Polymer 3 (wt-%) | Additive 1 (wt-%) | Additive 2 (wt-%) | AO content (wt-%) |
|---|---|---|---|---|---|
| Inventive formulation 1 | 84.77 | 15 % Polymer 2* | - | - | 0.23 wt-% AO-1 |
| Inventive formulation 2 | 84.79 | 15 % Polymer 3 | - | - | 0.21 wt-% AO-1 |
| Formulation 3 (Ref.) | 98.8 | - | 0.25 | 0.35 | 0.2 wt-% AO-2/0.4 wt-% AO-3 |
| Comparative example 1 | 99.75 | - | - | - | 0.25 wt-% AO-1 |
| Comparative example 2 | 99.4 | - | - | - | 0.2 wt% AO-2/0.4 wt-% AO-3 |
| *corresponds to 246 micromoles polar comonomer units per gram of polymer composition | | | | | |

**Table 2b.** *Formulations tested in the wet ageing tests*

| Formulation | Polymer 1 (wt%) | Polymer 2 or Polymer 3 (wt-%) | Additive 1 (wt-%) | Additive 2 (wt-%) | AO content (wt-%) | Crosslinking agent (wt-%) |
|---|---|---|---|---|---|---|
| Inventive formulation 4 | 84.77 | 15 % Polymer 2 | - | - | 0.23 wt% AO-1 | 1.9 |
| Formulation 5 (Ref.) | 98.8 | - | 0.25 | 0.35 | 0.2 wt% AO-2/0.4 wt-% AO-3 | 1.9 |
| Inventive formulation 6 | 84.70 | 15% Polymer 3 | - | - | 0.21 wt% AO-1 | 1.9 |
| Comparative example 3 | 99.75 | - | - | - | 0.25 wt-% AO-1 | 1.9 |
| AO= antioxidant<br>AO-1 = 4,4'-thiobis-(2-tert-butyl-5-methylphenol), CAS number 96-69-5<br>AO-2 = 2,2'-thio-diethyl-bis-(3-(3,5-di-tertbutyl-4-hydroxyphenyl)propionate), CAS number 41484-35-9<br>AO-3 = di-stearyl-thio-dipropionate, CAS number 693-36-7<br>Crosslinking agent = dicumylperoxide, CAS 80-43-3<br>Additive 1 = polyethyleneglycol (PEG 20000), CAS number 25322-68-3<br>Additive 2 = polyglycerolester, CAS number 68953-55-9 | | | | | | |

Inventive formulations 4 and 6 and comparative example 3 have been treated under crosslinking conditions. The crosslinking results are shown in Table 3.

**Table 3.** *Crosslinking results*

| Formulation | Hot set elongation (%) | Elastograph value (Nm) |
|---|---|---|
| Inventive formulation 4 | 35% | 0.93 |
| Inventive formulation 6 | 42% | 0.95 |
| Comparative example 3 | 37% | 0.98 |

The hot set data show that the Inventive formulation 4 and 6 are approximately of the same degree of crosslinking as the Comparative example 3.

For inventive formulations 4 and 6, Reference Formulation 5 and comparative example 3, the initial electric breakdown values and those obtained after wet ageing of 1000 h were determined. The data are shown in Table 4.

**Table 4.** *Wet ageing results, Eb*

| Formulation | $E_b$ (t=0h) (kV/mm) | $E_b$ (t=1000 h) (kV/mm) |
|---|---|---|
| Inventive formulation 4 | 55.6 | 50 |
| Formulation 5 (Ref.) | 59.9 | 47.5 |
| Inventive formulation 6 | 60.8 | 36 |
| Comparative example 3 | 52 | 36 |

The electrical breakdown results show that the Inventive formulation 4 and reference formulation 5 give rise to a higher $E_b$ value after wet ageing. The inventive formulation 5 does not have any negative influence.

**Table 5.** *Wet ageing results, tree count and tree length*

| Formulation | Number of bow-tie trees (mm$^{-3}$) | Longest bow-tie tree ($\mu$m) | Number of vented trees (mm$^{-2}$) | Longest vented tree ($\mu$m) |
|---|---|---|---|---|
| Inventive formulation 4 | 12 | 400 | 0.13 | 200 |
| Comparative example 3 | 12 | 1000 | 0.45 | 700 |

The tree count data support the electrical breakdown data, less trees and shorter trees are formed in the Inventive formulation.

In Tables 6 and 7, the results from the rheological measurements are summarized.

**Table 6.** *Rheological data*

| Formulation | $\eta_0$ (Pa s) | $\eta_{1kPa}$ (Pa s) | SHI (0/100) | SHI (1/100) |
|---|---|---|---|---|
| Inventive formulation 1 | 13000 | 13000 | 4.4 | 3.9 |
| Inventive formulation 2 | 16000 | 13600 | 4.9 | 4.3 |
| Comparative example 1 | 10000 | 9920 | 3.0 | 2.9 |

A formulation that results in a higher $\eta_0$ (or $\eta_1$) value (i.e. higher viscosity at low shear) shows that the formulation has a higher melt strength. In this application (cables) it is important to have a good melt strength. If the melt strength is too low this will result in a cable that does not have an even thickness of the insulation layer. Instead it will have a pear shaped appearance. An uneven insulation thickness is unacceptable from an electrical point of view.

A high shear thinning index shows that the viscosity at high shear rates (i.e. similar conditions that are present in an extruder) is lower. This means that the processability is better.

**Table 7.** *Melt strength measurements (haul-off)*

| Speed (m/min) | Inventive formulation 1 (g) | Inventive formulation 2 (g) | Comparative example 1 (g) |
|---|---|---|---|
| 2 | 1,28 | 2,34 | 0,92 |

The haul-off data also show that an improved melt strength is reached in the Inventive formulations as the force reached is higher.

**Table 8.** *Extrusion data*

| Formulation | Temperature settings used (°C) | Melt pressure (bar) |
|---|---|---|
| Formulation 3 (Ref.) | 130/132/134 | 117-122 |
| Comparative example 2 | 130/132/134 | 126-130 |
| | | |
| Formulation 3 (Ref.) | 140/142/144 | 100-105 |
| Comparative example 2 | 140/142/144 | 109-115 |

Low pressure materials can give rise to high melt pressures and melt temperatures. To use a multimodal, in this example a bimodal material, these properties can be improved. However, in some cases these improvements are not enough and further refinement of the concept is needed. To use the inventive solutions, by blending with low density polyethylene polymers or polar copolymers, the extrusion properties together with the melt strength can be improved. The solutions do indeed lead to an improved wet ageing performance as well.

A lower melt pressure is desired from an extrusion point of view as a lower pressure indicates that the material is easier to extrude and that less power is needed to get the material through the components of the machine.

**Claims**

1. A multilayered power cable, wherein at least one layer thereof, which is an insulation layer, comprises a polymer composition, comprising

   (a) a polyolefin base resin which comprises at least

      (a1) a first olefin homo- or copolymer fraction, and
      (a2) a second olefin homo- or copolymer fraction,

   wherein the weight average molecular weight as determined by high temperature size exclusion chromatography of the first fraction is lower than the weight average molecular weight of the second fraction, and
   (b) at least one additive selected from a polar copolymer; and a low density polyethylene, wherein the polymer composition has a viscosity $\eta_1$ at the complex modulus G*=1 kPa of at least 9950 Pa*s measured at 135°C.

2. The cable according to claim 1, wherein the first olefin homo-or copolymer fraction has a density of 0.860 to 0.945 g/cm³.

3. The cable according to claim 1 or 2, wherein the first olefin homo-or copolymer fraction has a melt flow rate $MFR_{2.16kg}$/190°C of 1 to 800 g/10 min (according to ISO1133).

4. The cable according to one of the preceding claims, wherein the first and/or the second fraction is an ethylene copolymer prepared by copolymerization of ethylene with at least one comonomer selected from $C_3$ to $C_{20}$ alpha-olefins.

5. The cable according to one of the preceding claims, wherein the polyolefin base resin has a density of 0.860 to 0.945 g/cm³.

6. The cable according to one of the preceding claims, wherein the polyolefin base resin has a melt flow rate $MFR_{2.16kg}$/190°C of 0.1 to 15.0 g/10 min.

7. The cable according to one of the preceding claims, wherein the polyolefin base resin has a molecular weight distribution Mw/Mn of at least 3.

8. The cable according to one of the preceding claims, wherein the polar copolymer is prepared by copolymerization of an olefin monomer and a polar comonomer.

9. The cable according to claim 8, wherein the olefin monomer is selected from ethylene, $C_3$ to $C_{20}$ alpha-olefins, or mixtures thereof.

10. The cable according to claim 8 or 9, wherein the polar comonomer is selected from acrylates, methacrylates, vinyl acetate, or mixtures thereof.

11. The cable according to one of the claims 8 to 10, wherein the polar copolymer has an amount of units derived from the polar comonomer of less than 3000 micromoles per gram of polar copolymer.

12. The cable according to one of the claims 8 to 11, wherein the olefin monomer is ethylene and the polar comonomer is selected from $C_1$ to $C_6$ alkyl acrylates or methacrylates.

13. The cable according to claim 12, the polar copolymer further comprising units derived from a $C_3$ to $C_{20}$ alpha-olefin comonomer.

14. The cable according to one of the preceding claims, wherein the low-density polyethylene has a density of less than 0.935 g/cm³.

15. The cable according to one of the preceding claims, the low-density polyethylene further comprising units derived from a $C_3$ to $C_{20}$ alpha-olefin comonomer.

16. The cable according to one of the preceding claims, the low-density polyethylene further comprising units derived from a polar comonomer selected from acrylates, methacrylates, vinyl acetate, or mixtures thereof.

17. The cable according to claim 16, wherein the low-density polyethylene has an amount of units derived from the polar comonomer of less than 3000 micromoles per gram of low-density polyethylene.

**Patentansprüche**

1. Mehrschichtiges Energiekabel, wobei mindestens eine Schicht davon, die eine Isolierschicht ist, eine Polymerzusammensetzung umfasst, umfassend

(a) ein Polyolefinbasisharz, das mindestens Folgendes umfasst:

(a1) eine erste Olefinhomo- oder -copolymerfraktion und
(a2) eine zweite Olefinhomo- oder -copolymerfraktion,

wobei das Gewichtsmittel des Molekulargewichts, bestimmt durch Hochtemperatur-Größenausschlusschromatographie, der ersten Fraktion niedriger ist als das Gewichtsmittel des Molekulargewichts der zweiten Fraktion, und
(b) mindestens einen Zusatzstoff, ausgewählt aus einem polaren Copolymer; und einem Polyethylen niedriger Dichte;

wobei die Polymerzusammensetzung eine Viskosität $\eta_1$ bei dem Komplexmodul G* = 1 kPa von mindestens 9950 Pa*s aufweist, gemessen bei 135 °C.

2. Kabel nach Anspruch 1, wobei die erste Olefinhomo- oder -copolymerfraktion eine Dichte von 0,860 bis 0,945 g/cm$^3$ aufweist.

3. Kabel nach Anspruch 1 oder 2, wobei die erste Olefinhomo- oder -copolymerfraktion einen Schmelzflussindex $MFR_{2,16kg}$/190 °C von 1 bis 800 g/10 min aufweist (nach ISO1133).

4. Kabel nach einem der vorhergehenden Ansprüche, wobei die erste und/oder die zweite Fraktion ein Ethylencopolymer ist, das durch Copolymerisation von Ethylen mit mindestens einem Comonomer, ausgewählt aus $C_3$ bis $C_{20}$ alpha-Olefinen, hergestellt ist.

5. Kabel nach einem der vorhergehenden Ansprüche, wobei das Polyolefinbasisharz eine Dichte von 0,860 bis 0,945 g/cm$^3$ aufweist.

6. Kabel nach einem der vorhergehenden Ansprüche, wobei das Polyolefinbasisharz einen Schmelzflussindex $MFR_{2,16kg}$/190 °C von 0,1 bis 15,0 g/10 min aufweist.

7. Kabel nach einem der vorhergehenden Ansprüche, wobei das Polyolefinbasisharz eine Molekulargewichtsverteilung Mw/Mn von mindestens 3 aufweist.

8. Kabel nach einem der vorhergehenden Ansprüche, wobei das polare Copolymer durch Copolymerisation eines Olefinmonomers und eines polaren Comonomers hergestellt ist.

9. Kabel nach Anspruch 8, wobei das Olefinmonomer aus Ethylen, $C_3$ bis $C_{20}$ alpha-Olefinen oder Mischungen davon ausgewählt ist.

10. Kabel nach Anspruch 8 oder 9, wobei das polare Comonomer aus Acrylaten, Methacrylaten, Vinylacetat oder Mischungen davon ausgewählt ist.

11. Kabel nach einem der Ansprüche 8 bis 10, wobei das polare Copolymer eine Menge von weniger als 3000 Mikromolen pro Gramm des polaren Copolymers an Einheiten aufweist, die sich von dem polaren Comonomer abgeleiteten.

12. Kabel nach einem der Ansprüche 8 bis 11, wobei das Olefinmonomer Ethylen ist und das polare Comonomer aus

$C_1$ bis $C_6$ Alkylacrylaten oder Methacrylaten ausgewählt ist.

13. Kabel nach Anspruch 12, wobei das polare Copolymer ferner Einheiten umfasst, die sich von einem $C_3$ bis $C_{20}$ alpha-Olefincomonomer ableiten.

14. Kabel nach einem der vorhergehenden Ansprüche, wobei das Polyethylen niedriger Dichte eine Dichte von weniger als 0,935 g/cm$^3$ aufweist.

15. Kabel nach einem der vorhergehenden Ansprüche, wobei das Polyethylen niedriger Dichte ferner Einheiten umfasst, die sich von einem $C_3$ bis $C_{20}$ alpha-Olefincomonomer ableiten.

16. Kabel nach einem der vorhergehenden Ansprüche, wobei das Polyethylen niedriger Dichte ferner Einheiten umfasst, die sich von einem polaren Comonomer ableiten, das aus Acrylaten, Methacrylaten, Vinylacetat oder Mischungen davon ausgewählt ist.

17. Kabel nach Anspruch 16, wobei das Polyethylen niederer Dichte eine Menge von weniger als 3000 Mikromolen pro Gramm des Polyethylens niederer Dichte an Einheiten aufweist, die sich von dem polaren Comonomer ableiten.

## Revendications

1. Câble d'alimentation multicouche, dans lequel au moins une couche de celui-ci, qui est une couche isolante, comprend une composition de polymère, qui comprend :

    (a) une résine de base en polyoléfine qui comprend au moins :

        (a1) une première fraction d'homopolymère ou de copolymère d'oléfine ; et
        (a2) une seconde fraction d'homopolymère ou de copolymère d'oléfine ;

    dans laquelle la masse moléculaire moyenne en masse, déterminée par une chromatographie d'exclusion de taille à haute température de la première fraction, est inférieure à la masse moléculaire moyenne en masse de la seconde fraction, et
    (b) au moins un additif choisi parmi un copolymère polaire ; et un polyéthylène basse densité,

    dans lequel la composition de polymère a une viscosité $\square_1$ au module complexe G* = 1 kPa d'au moins 9950 Pa.s, mesurée à 135°C.

2. Câble selon la revendication 1, dans lequel la première fraction d'homopolymère ou de copolymère d'oléfine a une masse volumique de 0,860 à 0,945 g/cm$^3$.

3. Câble selon la revendication 1 ou la revendication 2, dans lequel la première fraction d'homopolymère ou de copolymère d'oléfine a un indice de fluidité $MFR_{2,16kg/190°C}$ de 1 à 800 g/10 min (selon ISO 1133).

4. Câble selon l'une quelconque des revendications précédentes, dans lequel la première fraction et/ou la seconde fraction est un copolymère d'éthylène préparé par copolymérisation d'éthylène avec au moins un comonomère choisi parmi les alpha-oléfines en $C_3$ à $C_{20}$.

5. Câble selon l'une quelconque des revendications précédentes, dans lequel la résine de base en polyoléfine a une masse volumique de 0,860 à 0,945 g/cm$^3$.

6. Câble selon l'une quelconque des revendications précédentes, dans lequel la résine de base en polyoléfine a un indice de fluidité $MFR_{2,16kg/190°C}$ de 0,1 à 15,0 g/10 min.

7. Câble selon l'une quelconque des revendications précédentes, dans lequel la résine de base en polyoléfine a une distribution des masses moléculaires Mw/Mn au moins égale à 3.

8. Câble selon l'une quelconque des revendications précédentes, dans lequel le copolymère polaire est préparé par copolymérisation d'un monomère d'oléfine et d'un comonomère polaire.

9. Câble selon la revendication 8, dans lequel le monomère d'oléfine est choisi parmi l'éthylène, les alpha-oléfines en $C_3$ à $C_{20}$, ou des mélanges de ceux-ci.

10. Câble selon la revendication 8 ou 9, dans lequel le comonomère polaire est choisi parmi les acrylates, les méthacrylates, l'acétate de vinyle, ou des mélanges de ceux-ci.

11. Câble selon l'une quelconque des revendications 8 à 10, dans lequel le copolymère polaire présente une quantité de motifs dérivés du comonomère polaire inférieure à 3000 micromoles par gramme de copolymère polaire.

12. Câble selon l'une quelconque des revendications 8 à 11, dans lequel le monomère d'oléfine est l'éthylène et le comonomère polaire est choisi parmi les acrylates et les méthacrylates d'alkyle en $C_1$ à $C_6$.

13. Câble selon la revendication 12, dans lequel le copolymère polaire comprend en outre des motifs dérivés d'un comonomère d'alpha-oléfine en $C_3$ à $C_{20}$.

14. Câble selon l'une quelconque des revendications précédentes, dans lequel le polyéthylène basse densité présente une masse volumique inférieure à 0,935 g/cm$^3$.

15. Câble selon l'une quelconque des revendications précédentes, dans lequel le polyéthylène basse densité comprend en outre des motifs dérivés d'un comonomère d'alpha-oléfine en $C_3$ à $C_{20}$.

16. Câble selon l'une quelconque des revendications précédentes, dans lequel le polyéthylène basse densité comprend en outre des motifs dérivés d'un comonomère polaire choisi parmi les acrylates, les méthacrylates, l'acétate de vinyle, ou des mélanges de ceux-ci.

17. Câble selon la revendication 16, dans lequel le polyéthylène basse densité présente une quantité de motifs dérivés du comonomère polaire, inférieure à 3000 micromoles par gramme de polyéthylène basse densité.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4305849 A
- US 4812505 A
- WO 9931675 A
- WO 8505216 A
- US 6582795 B
- WO 9212182 A
- WO 9308222 A
- EP 517868 A

**Non-patent literature cited in the description**

- **L. WILD ; T.R. RYLE ; D.C. KNOBELOCH ; E.R. PEAK.** Polymer Physics Edition. *Journal of Polymer Science,* 1982, vol. 20, 441-455
- **LAND H.G. ; SCHÄDLICH H.** Model Cable Test for Evaluating the Ageing Behaviour under Water Influence of Compounds for Medium Voltage Cables. *Conference Proceedings of Jicable 91,* 24 June 1991